# EUROPEAN PATENT SPECIFICATION

(11) **EP 1 948 387 B1**
(45) Date of publication and mention of the grant of the patent: **13.04.2011**
(21) Application number: 06795003.0
(22) Date of filing: 23.10.2006
(51) Int. Cl.: B23K 9/16, B23K 26/20, B23K 10/02, B23K 15/00, F25D 3/12, B05B 1/30, C21D 9/50, B23K 37/00

(54) **NOZZLE FOR EMITTING SOLID CARBON DIOXIDE PARTICLES WITH AN AXIALLY DISPLACEABLE VALVE MEMBER; APPARATUS FOR COOLING A HEATED WELD ZONE WITH SUCH A NOZZLE; WELDING APPARATUS WITH SUCH COOLING APPARATUS**
DÜSE ZUM AUSSTOSS VON FESTEN KOHLENDIOXIDPARTIKELN MIT EINEM AXIAL VERSCHIEBBAREN VENTILGLIED, VORRICHTUNG ZUM KÜHLEN EINER ERWÄRMTEN SCHWEISSZONE MIT SOLCH EINER DÜSE, SCHWEISSVORRICHTUNG MIT SOLCH EINER KÜHLVORRICHTUNG
BUSE PERMETTANT D'EMETTRE DES PARTICULES DE DIOXYDE DE CARBONE SOLIDES ET COMPORTANT UN ELEMENT SOUPAPE AXIALEMENT MOBILE, APPAREIL DE REFROIDISSEMENT D'UNE ZONE DE SOUDURE CHAUFFEE UTILISANT UNE TELLE BUSE ET APPAREIL A SOUDER POURVU D'UN TEL APPAREIL DE REFROIDISSEMENT

(30) Priority: 01.11.2005 GB 0522317
(43) Date of publication of application: 30.07.2008
(73) Proprietor: The BOC Group Limited, The Surrey Research Park Guildford Surrey GU2 7XY (GB)
(72) Inventor: JOHNSON, Andrew, Neil, Guildford Surrey GU2 7XY (GB); RAND, Christopher, Peter, Guildford Surrey GU2 7XY (GB)
(74) Representative: Wickham, Michael
(86) International application number: PCT/GB2006/050346
(87) International publication number: WO 2007/052071

(56) References cited:
- EP-A- 1 396 287
- US-A- 2 566 888
- US-A- 2 631 891
- US-A- 2 746 800
- US-A- 2 862 294
- US-A- 4 806 171
- US-A- 4 857 694
- US-A- 5 902 497

## Description

The present invention relates to a nozzle for emitting solid carbon dioxide particles according to the preamble of claim 1 (see, for example, US 4 806 171), and to apparatus comprising such a nozzle for cooling a heated weld zone produced in a workpiece by a welding process (see claim 9) and a welding apparatus with such apparatus for cooling (see claim 16).

During the thermal welding of metallic workpieces a high heat input is required to generate an acceptable weld. However, this high heat input has the disadvantage that the thermal stresses generated by the welding process can cause significant levels of distortion of the workpieces being welded. Sheet workpieces of relatively soft metals and alloys such as mild steel, titanium, titanium alloys and stainless steels are particularly prone to distortion and reduced tensile strength.

It is known to use gases to provide forced cooling during arc welding processes. However, the results of using cooling gases are limited as the cooling ability of the gas streams is relatively low. Cryogens, particularly liquid nitrogen and solid carbon dioxide, have been used to provide enhanced cooling to arc welding processes, but if the weld zone is cooled excessively this can lead to distortion of the workpieces in the opposite direction. It is therefore desirable to balance the amount of cooling of the weld zone with the heat input from the welding process to result in little or no distortion of the workpieces.

A nozzle according to the present invention is defined in claim 1.

In a second aspect, the invention provides an apparatus for cooling a heated weld zone formed in a workpiece by a welding process according to claim 9.

A high velocity gas stream containing solid carbon dioxide particles can be produced by the adiabatic expansion of liquid carbon dioxide as it passes through a nozzle. Solid CO₂ particles collide with the hot surface of the weld zone and are rapidly sublimated as heat is extracted from the weld zone.

The apparatus preferably comprises a control system for controlling the position of the valve member within the duct. The rate at which the weld zone is cooled is dependent upon the rate at which solid CO₂ particles impact the surface of the weld zone. By controlling the position of the valve member within the duct, the rate at which solid CO₂ particles flow from the nozzle, and therefore the cooling rate of the weld zone, can be controlled so that distortion of the workpiece can be inhibited.

The flow rate of solid CO₂ particles from the nozzle, and therefore the position of the valve member within the duct, may be controlled in dependence on one or more of the following parameters:
- the temperature of the weld zone;
- one or more operational parameter of the welding process, such as welding voltage, welding current, the speed of the welding tool used to form the weld zone and the time taken to form the weld zone;
- the thickness of the workpiece;
- the material from which the workpiece is formed;
- the nature of the welding process (for example, MIG, TIG or submerged arc welding); and
- any strain measurement technique used to measure the residual stresses within the workpiece.

Information relating to the thickness and material of the workpiece, and the welding process, may be input into a control interface by an operator. Information relating to the various operational parameters of the welding process may be similarly input by the operator, or supplied to the control system directly by the welding tool. A non-contact temperature detector, such as an infrared temperature sensor, may be positioned in close proximity to the weld zone so that information relating to the temperature of the weld zone can be supplied to the control system. Similarly, strain gauges may also be positioned in close proximity to the weld zone so that information relating to deformation of the workpiece during the welding process can be supplied to the control system. This can enable the control system to rapidly and automatically adjust the ejection rate of the solid CO₂ particles in response to variation in the temperature of the weld zone and/or the operational parameters of the welding process and/or deformation of the workpiece so as to minimise residual stresses generated in the workpiece. Use of such a control system can also enable detailed cooling procedures to be created and performed in a controlled and reproducible manner.

The nozzle is preferably spaced from the workpiece by a distance in the range from 30 to 50 mm. Liquid carbon dioxide is preferably supplied to the nozzle at a pressure in the range from 16 to 18 bar.

The nozzle comprises a duct through which liquid carbon dioxide is expanded, a nozzle aperture through solid CO₂ particles are emitted from the nozzle, and a valve member moveable within the duct to vary the flow rate of solid CO₂ particles from the nozzle. The valve member is, according to the present invention, in the form of an elongate valve member that is axially displaceable within the duct to control the cross-section of the flow of CO₂ through the duct, and thereby control the flow rate of solid CO₂ particles from the nozzle.

The duct comprises a convergent section in which liquid carbon dioxide is accelerated towards a sonic speed. The second convergent portion of the valve member is preferably located at least partially within the convergent section such that axial displacement of the valve member relative to the convergent section varies the cross-section of the flow of CO₂ through the duct. The second convergent portion preferably has a taper angle that is substantially the same as that of the convergent section of the duct, so that in a closed position of the valve member the second convergent portion of the valve member engages the convergent section of the duct to prevent flow of CO₂ from the nozzle.

The duct and valve member are profiled to control the location of the minimum cross-section of the CO₂ flow when the valve member is subsequently moved to an open position. For example, in the embodiment, according to the present invention, the duct has a throat located between the convergent section and the nozzle aperture. The valve member has, according to the present invention, a substantially cylindrical portion located between the convergent portions of the valve member. The valve member can have a diameter slightly smaller than, preferably between 5 and 15 µm smaller than, the diameter of the throat. In the closed position, the cylindrical portion, according to the present invention, is located just beneath or adjacent the throat. As the valve member is axially displaced from the closed position to an open position, the cylindrical portion of the valve member can be rapidly positioned within the throat, in the preferred embodiment within an axial displacement of between 0 and 100 µm, for example around 50 µm, from the closed position. This can rapidly establish the minimum cross-section of the CO₂ flow through the duct at the throat, inhibiting solid CO₂ formation upstream from the throat.

The cylindrical portion of the valve member preferably extends between 0.4 and 0.6 mm between these convergent portions of the valve member. The first convergent portion, located between the cylindrical portion and tip of the valve member, preferably has a taper angle that is smaller than that of the first convergent portion. The taper angle of the first convergent section of the valve member is between 5 and 15°, and the taper angle of the second convergent section of the valve member is between 15 and 25°.

The duct comprises, according to the present invention, a divergent section located between the convergent section and the nozzle aperture so that as the liquid carbon dioxide passes through the throat it expands, resulting in a phase change from liquid carbon dioxide to solid and gaseous carbon dioxide. As the gaseous carbon dioxide flows through the divergent section of the duct, it further expands and therefore increases in speed. Consequently, the solid carbon dioxide particles entrained within the gaseous carbon dioxide are accelerated towards the weld zone to impact with the weld zone at a high velocity. This can enable the solid CO₂ particles to impact the surface of the weld zone with sufficient velocity to allow a good heat transfer rate to occur without a gas insulant layer being created.

Movement of the valve member within the duct may be actuated by any suitable electro-mechanical device, such as a linear or stepper motor. An encoder or other linear position sensor may be provided for tracking motion of the valve member, and for providing data to a controller of the control system for use in controlling the motor drive.

In a third aspect, the present invention provides welding apparatus according to claim 16.

The nozzle may be used for purposes other than cooling a heated weld zone.

Preferred features of the present invention will now be described with reference to the accompanying drawings, in which:
Figure 1 illustrates apparatus for welding a workpiece;
Figure 2 is a cross-sectional view of a nozzle from which solid carbon dioxide particles flow toward the weld zone formed in the workpiece;
Figure 3 illustrates the tapered head of a valve member of the nozzle of Figure 2;
Figure 4 illustrates the tapered head of the valve member when the valve member is in a closed position; and
Figure 5 illustrates the tapered head of the valve member when the valve member is in an open position.

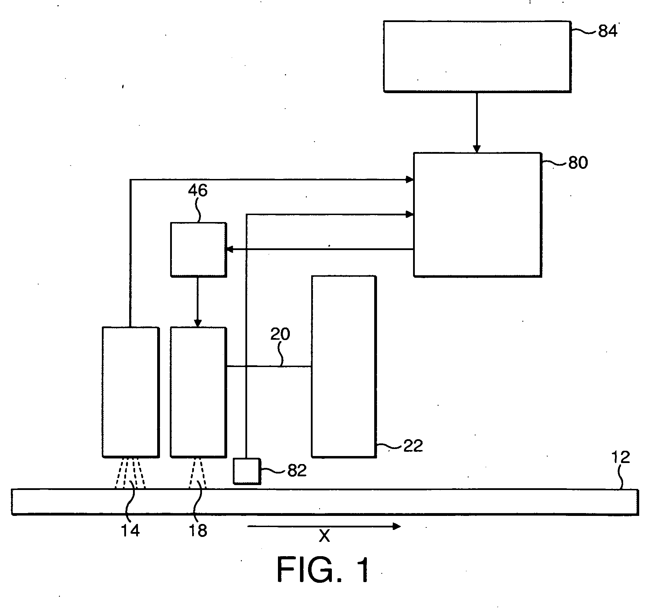

Figure 1 illustrates a welding tool 10 for welding a workpiece 12, in this example in the form of a sheet metal plate. The welding tool 10 may be any form of welding torch, such as a MIG welding torch. As is known, such a welding torch feeds a consumable electrode to a weld zone of the workpiece 12. An electric arc 14 is struck between the tip of the electrode and the workpiece 12 in the vicinity of the weld zone. Molten metal is transferred from the electrode to the weld zone through the arc 14. A shielding gas, typically consisting of argon, optionally with relatively small quantities of oxygen and carbon dioxide added, is supplied from the welding torch around the consumable electrode so as to inhibit oxidation of the weld metal. The workpiece 12 may be moved relative to the welding tool 10 to cause the weld zone to move along the workpiece, or the welding tool 10 may be moved relative to the workpiece 12.

In order to cool the weld zone formed in the workpiece 12, a nozzle 16 is provided for emitting a supersonic stream 18 of solid CO₂ particles towards the heated weld zone. The nozzle 16 is spaced from the welding tool 10, preferably by a distance in the range from 50 to 100 mm in the direction (indicated at X in Figure 1) of relative movement between the welding tool 10 and the workpiece 12, so that the weld zone formed in the workpiece 12 by the welding tool 10 is impacted by the stream 18 of solid CO₂ particles flowing from the nozzle 16 without the CO₂ stream impinging upon the shielding gas surrounding the melt pool formed in the workpiece 12 during the welding process.

The nozzle 16 receives liquid CO₂ from a supply line 20 connected between the nozzle 16 and a supply tank 22 storing liquid CO₂ at a pressure in the range from 16 to 18 bar. A valve (not shown) may be provided in the supply line 20 for closing the supply of CO₂ to the nozzle. A phase separator (not shown) is also provided in the supply line 20 for separating gaseous CO₂ from liquid CO₂. As described in more detail below, the stream 18 of solid CO₂ particles is formed through adiabatic expansion of the liquid CO₂ within the nozzle 16. This causes the pressure of the liquid CO₂ to fall below the triple point pressure of CO₂, resulting in a phase change from liquid CO₂ to a mixture of solid CO₂ particles and gaseous CO₂.

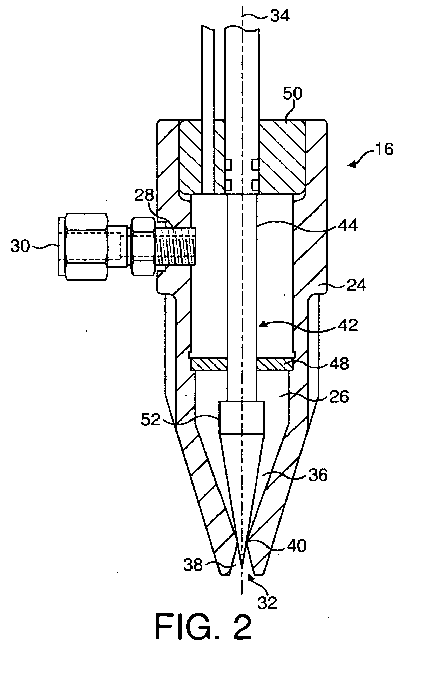

Figure 2 illustrates the nozzle 16 in more detail. The nozzle 16 has an elongate tubular body 24 housing a CO₂ flow duct 26. A CO₂ inlet 28 supplies liquid CO₂ radially into the duct 26, a connector 30 being provided for connecting the inlet 28 to the supply line 20. A nozzle aperture 32 co-axial with the longitudinal axis 34 of the duct 26 emits a jet stream of gaseous CO₂ and solid CO₂ particles from the duct 26. The duct 26 has a convergent section 36, and a divergent section 38 located between the convergent section 36 and the nozzle aperture 32, the intersection of the convergent and divergent sections 36, 38 of the duct 26 defining a throat 40 at which the cross-section of the duct 26 is at a minimum. The nozzle aperture 32 is preferably spaced from the workpiece 12 by a distance in the range from 25 to 125 mm, most preferably in the range from 30 to 50 mm.

The nozzle 16 includes a valve member 42 that is moveable within the duct 26 to vary the flow rate of solid carbon dioxide particles from the nozzle. In this example, the valve member 42 is in the form of an elongate valve member 42 that is axially displaceable along the longitudinal axis 34 of the duct 26 and aligned co-axially therewith. The valve member 42 has a shaft 44 that projects outwardly from the body 24 of the nozzle 16 and is coupled to an electro-mechanical device 46, such as a linear or stepper motor, for axially displacing the valve member 42 within the duct 26 to vary the flow of CO₂ through the duct 26. The shaft 44 is supported within the duct 26 by a support spider 48, and also by a guide bushing 50 that closes the end of the duct 26 opposite the nozzle aperture 32.

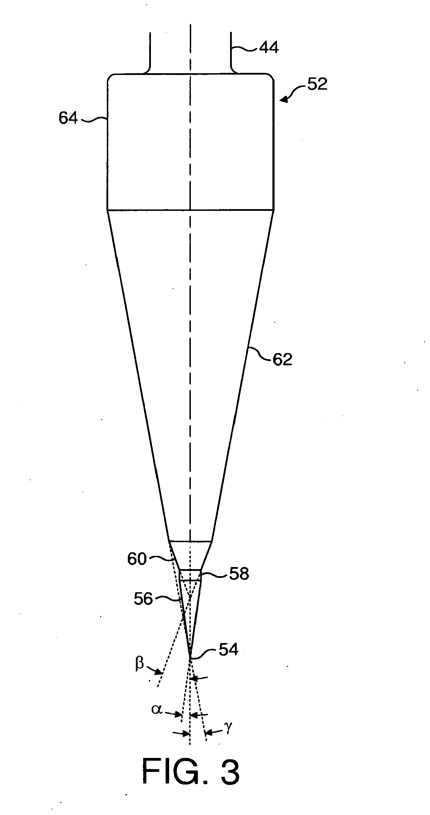

The valve member 42 also has a tapered head 52, the profile of which is illustrated in Figure 3. From the tip 54 of the valve member 42, the head 52 comprises a first convergent section 56 having a taper angle α, in this example between 5 and 10°, a first substantially cylindrical portion 58, a second convergent section 60 having a taper angle β, where β>α, in this example between 15 and 25°, a third convergent section 62 having a taper angle γ, where γ≈ α, and a second substantially cylindrical portion 64. The first cylindrical portion 58 has a length in the range from 0.4 to 0.6 mm, in this example 0.5 mm, and a diameter that is in the range from 1.5 to 1.7 mm, in this example approximately 1.59 mm, and is slightly less than the diameter of the throat 40 of the duct 26, which in this example is approximately 1.60 mm.

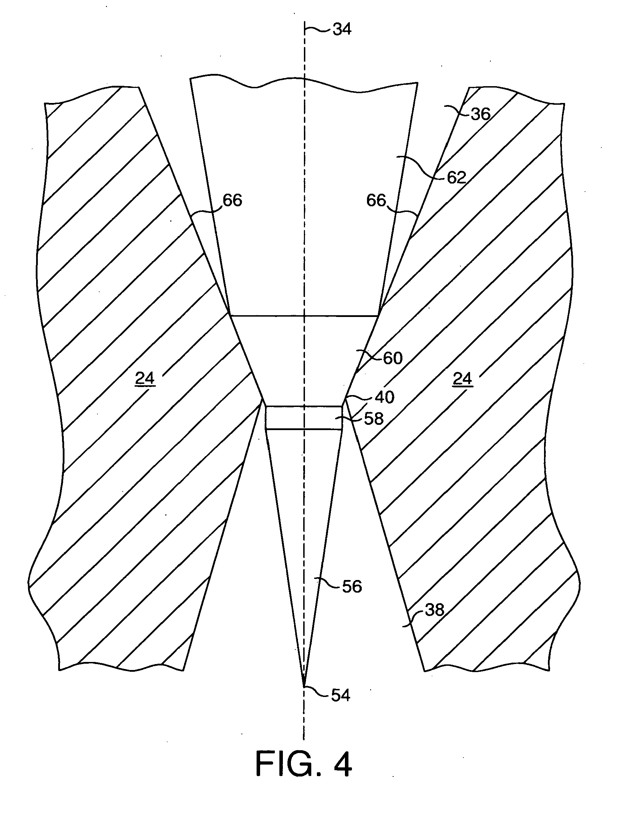

Figure 4 illustrates the position of the head 52 relative to the throat 40 of the duct when the valve member 42 is in a closed position. In this position, the outer surface of the second convergent portion 60 of the head 52 engages the inner surface 66 of the convergent section 36 of the duct 26 to form a seal that prevents flow of CO₂ into the divergent section 38 of the duct 26. In the closed position, the first cylindrical portion 58 of the head 52 is located just beneath (as illustrated) the throat 40 of the duct 26, and is preferably no more than 100 µm beneath the throat 40. In this example, the cylindrical portion 58 is less than 50 µm beneath the throat 40 when the valve member 42 is in the closed position.

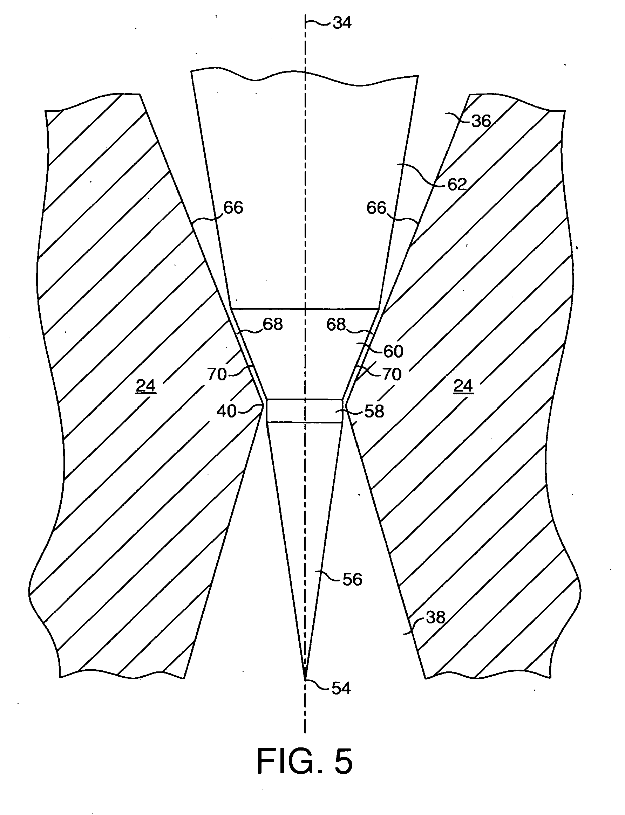

As the valve member 42 is axially displaced from the closed position to an open position by actuation of the electro-mechanical device 46, an annular flow channel 68 is created between the inner surface of the duct 26 and the outer surface of the head 52, as illustrated in Figure 5. The duct 26 and valve member 42 are profiled so that when the valve member 42 is in an open position, the cross-section of the annular flow channel 68 narrows between the inlet 28 and the throat 40 so that the speed of liquid CO₂ increases towards a supersonic speed, and then widens from the throat 40 to the nozzle aperture 32 so that the liquid CO₂ expands whilst gathering further speed to reach a supersonic speed. As mentioned above, expansion of the liquid CO₂ causes the pressure of the liquid CO₂ to fall below the triple point pressure of CO₂, resulting in a phase change from liquid CO₂ to a mixture of solid CO₂ particles and gaseous CO₂.

In order to inhibit formation of solid CO₂ particles upstream from the throat 40 of the duct 26, the first cylindrical portion 58 of the head 52 is preferably located less than 50 µm beneath the throat 40 when the valve member 42 is in the closed position, and has a diameter that is preferably around 0.1 mm less than that of the duct 26. Consequently, within the first 50 µm axial displacement of the valve member 42, the first cylindrical portion 58 is located within the throat 40, where it remains, in this embodiment, for the next 0.5 mm axial displacement of the valve member, this being the length of the first cylindrical portion 58. Due to the narrow annular gap established between the first cylindrical portion 58 and the throat 40 of the duct 26 during this period, as the wall 70 of the second convergent portion 60 of the head 52 continues to move away from the wall 66 of the convergent section 36 of the duct 26 the minimum cross-section of the annular flow channel at the throat 40 of the duct 26 is rapidly established at the throat 40.

With continued axial displacement of the valve member 42 from the closed position, the first convergent portion 56 of the head 52 becomes located within the throat 40 of the duct 26. Due to the narrow taper of this portion 56 of the head 52, in this example α≈8°, the minimum cross-section of the annular flow channel 68 remains located at the throat 40, and the size of the minimum cross-section increases gradually with continued axial displacement of the valve member 42. Furthermore, the shape of the first convergent portion 56 of the head 52 enables a concentrated, controlled stream of solid carbon dioxide particles to flow from the nozzle towards the weld zone, thereby optimising the efficiency of the cooling of the weld zone.

As the valve member 42 is axially displaced from the closed position, the size of the annular flow channel 68 within the convergent section 38 of the duct 26 increases, and so both the flow rate of CO₂ through the duct 26 and the amount of solid CO₂ particles flowing from the nozzle 16 increases with movement of the valve member 42 from the closed position. Consequently, the flow rate of solid CO₂ particles towards the heated weld zone, and therefore the rate of cooling of the weld zone, can be controlled through control of the position of the valve member 42 within the duct 26. Returning to Figure 1, a control system is provided for controlling the position of the valve member 42. The control system includes the electro-mechanical drive 46 for actuating the axial displacement of the valve member 42, and a controller 80 for controlling actuation of the drive 46 and thereby control the position of the valve member 42 relative to the duct 26. The controller 80 may be configured to control the drive 46 in dependence on one or more parameters, including, but not limited to:
- the temperature of the weld zone;
- one or more operational parameter of the welding process, such as welding voltage, welding current, the speed of the welding tool 10 and the time taken to form the weld zone;
- the thickness of the workpiece 12;
- the material from which the workpiece 12 is formed;
- the nature of the welding process (for example, MIG, TIG or submerged arc welding); and
- any strain measurement technique used to measure the residual stresses within the workpiece 12.

Information relating to the temperature of the weld zone may be provided by an infrared temperature sensor 82 located adjacent the nozzle 16. The infrared temperature sensor 82 absorbs ambient infrared radiation given off by the heated weld zone. The incoming light is converted to an electric signal, which corresponds to a particular temperature, and is supplied to the controller 80. The controller 80 can then rapidly and automatically adjust the flow rate of the solid CO₂ particles from the nozzle 16 in response to variation in the temperature of the weld zone.

In addition to, or as an alternative to, using a temperature sensor 82 to provide information regarding the temperature of the weld zone, a strain measurement technique may be used to provide information regarding deformation of the workpiece during the welding process, with the controller 80 rapidly and automatically adjusting the flow rate of the solid CO₂ particles from the nozzle 16 in response to the deformation of the workpiece 12.

Information relating to the thickness and material of the workpiece may be input into a control interface 84 by an operator and supplied to the controller 80 for controlling the flow rate of the solid CO₂ particles from the nozzle 16. The interface may be physically separate from the controller 80, or it may be integral with the controller 80. Information relating to the various operational parameters of the welding process, and relating to the nature of the welding process itself, may be similarly input by the operator using the control interface 84, or supplied to the controller directly by the welding tool.

The control system may also include an encoder (not shown) for monitoring the position of the valve member 42, and for supplying signals indicative of the current position of the valve member 42 to the controller 80 for use in controlling the drive 46.

The current rate at which CO₂ is flowing from the nozzle can be used to modulate the extraction rate of gases from the weld zone in order to capture the spent coolant whilst both preventing the arc from being blown out, and preventing extraction of the shielding gases surrounding the melt pool during the welding process.

## Claims

1. A nozzle (16) for emitting solid carbon dioxide particles, the nozzle comprising an inlet (28) for receiving liquid carbon dioxide, a nozzle aperture (32) from which solid carbon dioxide particles flow from the nozzle, a duct (26) extending between the inlet (28) and the nozzle aperture (32), the duct (26) having a convergent section (36) and a divergent section (38), and an axially displaceable elongate valve member (42) located within the duct (26) to control the cross-section of the flow of carbon dioxide through the duct (26), the valve member (42) having first (56) and second (60) convergent portions (56,60), wherein the second convergent portion (60) of the valve member (42) controls the convergent section (36) of the duct (26) when the valve member (42) is in a closed position and the duct (26) comprises a throat (40) located between the convergent section (36) and the divergent section (38), **characterised in that** the valve member (42) has a substantially cylindrical portion (58) located between the first (56) and second (60) convergent portions (56,60) so that, in use, the cylindrical portion (58) is located between the throat (40) and the nozzle aperture (32) when the valve member (42) is in a closed position.

2. A nozzle (16) according to Claim 1, wherein the second convergent portion (60) of the valve member (42) has a taper angle that is substantially the same as that of the convergent section (36) of the duct (26).

3. A nozzle (16) according to Claim 1 or Claim 2, wherein the taper angle of the second convergent portion (60) is between 15 and 25°.

4. A nozzle (16) according to any preceding claim, wherein, in use, the cylindrical portion (58) is spaced from the throat (40) by a distance between 0 and 100 µm when the valve member (42) is in a closed position.

5. A nozzle (16) according to any preceding claim wherein the diameter of the cylindrical portion (58) is between 5 and 15 µm smaller than the diameter of the throat (40).

6. A nozzle (16) according to any preceding claim, wherein the cylindrical portion (58) extends between the convergent portions (56,60) of the valve member (42) by a distance in the range from 0.4 to 0.6 mm.

7. A nozzle (16) according to any preceding claim, wherein the taper angle (β) of the first convergent portion (56) is smaller that the taper angle of the second convergent portion (60).

8. A nozzle (16) according to any preceding claim, wherein the taper angle (α) of the first convergent section (56) of the valve member (142) is between 5 and 15°.

9. Apparatus for cooling a heated weld zone formed in a workpiece (12) by a welding process, the apparatus comprising a nozzle (16) according to any preceding claim for emitting solid carbon dioxide particles towards the weld zone.

10. Apparatus according to Claim 9, comprising a control system (80) for controlling the position of the valve member (42) within the duct (36).

11. Apparatus according to Claim 10, wherein the control system (80) is configured to control the position of the valve member (42) within the duct (26) in dependence on the temperature of the weld zone.

12. Apparatus according to Claim11, wherein the control system (80) is configured to receive signals indicative of the temperature of the weld zone from a thermal sensor (82) located proximate the weld zone.

13. Apparatus according to any of Claims 10 to 12, wherein the control system (80) is configured to control the position of the valve member (42) within the duct (26) in dependence on at least one operational parameter of the welding process.

14. Apparatus according to Claim13, wherein said at least one operational parameter of the welding process comprises at least one of welding current, welding voltage, the speed of a welding tool (10) used to form the weld zone and the time taken to form the weld zone.

15. Apparatus according to any of Claims10 to 14, wherein the control system (80) is configured to control the flow rate of solid carbon dioxide particles from the nozzle (16) in dependence on the deformation of the workpiece (12) during the welding process.

16. Welding apparatus comprising a welding tool (10) for forming a weld zone in a workpiece (12), and cooling apparatus according to any of Claims 10 to 15 for cooling the weld zone.

17. Apparatus according to Claim 16, wherein the cooling apparatus is arranged relative to the welding tool (10) such that the nozzle (16) is spaced from the welding tool by a distance in the range from 50 to 100 mm.

## Patentansprüche

1. Düse (16) zum Ausstoß von festen Kohlendioxidpartikeln, wobei die Düse einen Einlass (28) zur Aufnahme von flüssigem Kohlendioxid, eine Düsenöffnung (32), aus der feste Kohlendioxidpartikel von der Düse strömen, einen Kanal (26), der sich zwischen dem Einlass (28) und der Düsenöffnung (32) erstreckt, wobei der Kanal (26) einen konvergenten Bereich (36) und einen divergenten Bereich (38) hat, sowie ein axial verschiebbares längliches Ventilglied (42) umfasst, das sich innerhalb des Kanals (26) befindet, um den Querschnitt der Kohlendioxidströmung durch den Kanal (26) zu kontrollieren, wobei das Ventilglied (42) einen ersten (56) und einen zweiten (60) konvergenten Abschnitt (56, 60) hat, wobei der zweite konvergente Abschnitt (60) des Ventilglieds (42) den konvergenten Bereich (36) des Kanals (26) kontrolliert, wenn das Ventilglied (42) in einer geschlossenen Position ist, und der Kanal (26) eine Kehle (40) umfasst, die sich zwischen dem konvergenten Bereich (36) und dem divergenten Bereich (38) befindet, **dadurch gekennzeichnet, dass** das Ventilglied (42) einen im Wesentlichen zylindrischen Abschnitt (58) hat, der sich zwischen dem ersten (56) und dem zweiten (60) konvergenten Abschnitt (56, 60) befindet, so dass sich der zylindrische Abschnitt (58) im Gebrauch zwischen der Kehle (40) und der Düsenöffnung (32) befindet, wenn das Ventilglied (42) in einer geschlossenen Position ist.

2. Düse (16) nach Anspruch 1, bei der der zweite konvergente Abschnitt (60) des Ventilglieds (42) einen Kegelwinkel hat, der im Wesentlichen demjenigen des konvergenten Bereichs (36) des Kanals (26) entspricht.

3. Düse (16) nach Anspruch 1 oder Anspruch 2, bei der der Kegelwinkel des zweiten konvergenten Abschnitts (60) zwischen 15 und 25° liegt.

4. Düse (16) nach einem der vorstehend aufgeführten Ansprüche, bei der der zylindrische Abschnitt (58) im Gebrauch mit einer Distanz von 0 bis 100 µm von der Kehle (40) beabstandet ist, wenn das Ventilglied (42) in einer geschlossenen Position ist.

5. Düse (16) nach einem der vorstehend aufgeführten Ansprüche, bei der der Durchmesser des zylindrischen Abschnitts (58) 5 bis 15 µm kleiner als der Durchmesser der Kehle (40) ist.

6. Düse (16) nach einem der vorstehend aufgeführten Ansprüche, bei der sich der zylindrische Abschnitt (58) zwischen den konvergenten Abschnitten (56, 60) des Ventilglieds (42) über eine Distanz im Bereich von 0,4 bis 0,6 mm erstreckt.

7. Düse (16) nach einem der vorstehend aufgeführten Ansprüche, bei der der Kehlwinkel (β) des ersten konvergenten Abschnitts (56) kleiner als der Kehlwinkel des zweiten konvergenten Abschnitts (60) ist.

8. Düse (16) nach einem der vorstehend aufgeführten Ansprüche, bei der der Kehlwinkel (α) des ersten konvergenten Bereichs (56) des Ventilglieds (142) zwischen 5 und 15° liegt.

9. Vorrichtung zum Kühlen einer erwärmten Schweißzone, die in einem durch ein Schweißverfahren geformten Werkstück (12) entstanden ist, wobei die Vorrichtung eine Düse (16) nach einem der vorstehend aufgeführten Ansprüche zum Ausstoß von festen Kohlendioxidpartikeln hin zur Schweißzone umfasst.

10. Vorrichtung nach Anspruch 9, die ein Kontrollsystem (80) zur Kontrolle der- Position des Ventilglieds (42) innerhalb des Kanals (26) umfasst.

11. Vorrichtung nach Anspruch 10, bei der das Kontrollsystem (80) so konfiguriert ist, dass die Position des Ventilglieds (42) innerhalb des Kanals (26) in Abhängigkeit von der Temperatur der Schweißzone kontrolliert werden kann.

12. Vorrichtung nach Anspruch 11, bei der das Kontrollsystem (80) so konfiguriert ist, dass es die Temperatur der Schweißzone anzeigende Signale von einem in der Nähe der Schweißzone befindlichen Wärmesensor (82) empfangen kann.

13. Vorrichtung nach einem der Ansprüche 10 bis 12, bei der das Kontrollsystem (80) so konfiguriert ist, dass die Position des Ventilglieds (42) innerhalb des Kanals (26) in Abhängigkeit von mindestens einer Betriebsgröße des Schweißverfahrens kontrolliert werden kann.

14. Vorrichtung nach Anspruch 13, bei der die mindestens eine Betriebsgröße des Schweißverfahrens mindestens den Schweißstrom, die Schweißspannung, die Geschwindigkeit eines Schweißwerkzeugs (10) zum Bilden der Schweißzone oder die zum Bilden der Schweißzone benötigte Zeit umfasst.

15. Vorrichtung nach einem der Ansprüche 10 bis 14, bei der das Kontrollsystem (80) so konfiguriert ist, dass die Strömungsrate fester Kohlendioxidpartikel aus der Düse (16) in Abhängigkeit von der Verformung des Werkstücks (12) während des Schweißverfahrens kontrolliert werden kann.

16. Schweißvorrichtung, die ein Schweißwerkzeug (10) zum Bilden einer Schweißzone in einem Werkstück (12) und eine Kühlvorrichtung nach einem der Ansprüche 10 bis 15 zum Kühlen der Schweißzone umfasst.

17. Vorrichtung nach Anspruch 16, bei der die Kühlvorrichtung im Verhältnis zum Schweißwerkzeug (10) so angeordnet ist, dass die Düse (16) vom Schweißwerkzeug um eine Distanz im Bereich von 50 bis 100 mm beabstandet ist.

## Revendications

1. Buse (16) pour émettre des particules de dioxyde de carbone solides, la buse comprenant une entrée (28) destinée à recevoir du dioxyde de carbone liquide, une ouverture de buse (32) à partir de laquelle les particules de dioxyde de carbone solides s'écoulent à partir de la buse, une conduite (26) qui s'étend entre l'entrée (28) et l'ouverture de buse (32), la conduite (26) présentant une section convergente (36) et une section divergente (38), et un élément de soupape allongé axialement mobile (42) qui est situé à l'intérieur de la conduite (26) pour commander la section transversale de l'écoulement de dioxyde de carbone à travers la conduite (26), l'élément de soupape (42) présentant des première (56) et deuxième (60) parties convergentes (56, 60), dans laquelle la deuxième partie convergente (60) de l'élément de soupape (42) commande la section convergente (36) de la conduite (26) lorsque l'élément de soupape (42) se trouve dans une position fermée, et la conduite (26) comprend un étranglement (40) qui est situé entre la section convergente (36) et la section divergente (38), **caractérisée en ce que** l'élément de soupape (42) présente une partie sensiblement cylindrique (58) qui est située entre la première (56) et la deuxième (60) parties convergentes (56, 60) de telle sorte que, lors de l'utilisation, la partie cylindrique (58), soit située entre l'étranglement (40) et l'ouverture de buse (32) lorsque l'élément de soupape (42) se trouve dans une position fermée.

2. Buse (16) selon la revendication 1, dans laquelle la deuxième partie convergente (60) de l'élément de soupape (42) présente un angle d'inclinaison qui est sensiblement le même que celui de la section convergente (36) de la conduite (26).

3. Buse (16) selon la revendication 1 ou la revendication 2, dans laquelle l'angle d'inclinaison de la deuxième partie convergente (60) est compris entre 15° et 25°.

4. Buse (16) selon l'une quelconque des revendications précédentes, dans laquelle, lors de l'utilisation, la partie cylindrique (58) est espacée de l'étranglement (40) d'une distance qui est comprise entre 0 µm et 100 µm lorsque l'élément de soupape (42) se trouve dans une position fermée.

5. Buse (16) selon l'une quelconque des revendications précédentes, dans laquelle le diamètre de la partie cylindrique (58) est de 5 µ à 15 µm plus petit que le diamètre de l'étranglement (40).

6. Buse (16) selon l'une quelconque des revendications précédentes, dans laquelle la partie cylindrique (58) s'étend entre les parties convergentes (56, 60) de l'élément de soupape (42) sur une distance qui est comprise dans la gamme de 0,4 mm à 0,6 mm.

7. Buse (16) selon l'une quelconque des revendications précédentes, dans laquelle l'angle d'inclinaison (β) de la première partie convergente (56) est plus petit que l'angle d'inclinaison de la deuxième partie convergente (60).

8. Buse (16) selon l'une quelconque des revendications précédentes, dans laquelle l'angle d'inclinaison (α) de la première partie convergente (56) de l'élément de soupape (42) est compris entre 5° et 15°.

9. Appareil de refroidissement d'une zone de soudure chaude formée dans une pièce (12) par un procédé de soudage, l'appareil comprenant une buse (16) selon l'une quelconque des revendications précédentes pour émettre des particules de dioxyde de carbone solides en direction de la zone de soudure.

10. Appareil selon la revendication 9, comprenant un système de commande (80) pour commander la position de l'élément de soupape (42) à l'intérieur de la conduite (26).

11. Appareil selon la revendication 10, dans lequel le système de commande (80) est configuré de manière à commander la position de l'élément de soupape (42) à l'intérieur de la conduite (26) en fonction de la température de la zone de soudure.

12. Appareil selon la revendication 11, dans lequel le système de commande (80) est configuré de manière à recevoir des signaux indicatifs de la température de la zone de soudure en provenance d'un capteur thermique (82) qui est situé à proximité de la zone de soudure.

13. Appareil selon l'une quelconque des revendications 10 à 12, dans lequel le système de commande (80) est configuré de manière à commander la position de l'élément de soupape (42) à l'intérieur de la conduite (26) en fonction d'au moins un paramètre opérationnel du procédé de soudage.

14. Appareil selon la revendication 13, dans lequel ledit au moins un paramètre opérationnel du procédé de soudage comprend au moins soit un courant de soudage, une tension de soudage, la vitesse d'un outil de soudage (10) qui est utilisé pour former la zone de soudure ou le temps requis pour former la zone de soudure.

15. Appareil selon l'une quelconque des revendications 10 à 14, dans lequel le système de commande (80) est configuré de manière à commander le débit de particules de dioxyde de carbone solides en provenance de la buse (16) en fonction de la déformation de la pièce (12) pendant le procédé de soudage.

16. Appareil de soudage comprenant un outil de soudage (10) pour former une zone de soudure dans une pièce (12), et un appareil de refroidissement selon l'une quelconque des revendications 10 à 15 pour refroidir la zone de soudure.

17. Appareil selon la revendication 16, dans lequel l'appareil de refroidissement est agencé par rapport à l'outil de soudage (10) de telle sorte que la buse (16) soit espacée de l'outil de soudage d'une distance qui est comprise dans la gamme de 50 mm à 100 mm.
